# EUROPEAN PATENT SPECIFICATION

(11) **EP 4 291 325 B1**
(45) Date of publication and mention of the grant of the patent: **27.11.2024**
(21) Application number: 22705045.7
(22) Date of filing: 09.02.2022
(51) Int. Cl.: B01J 8/02

(54) **CATALYTIC SYNTHESIS REACTOR**
REAKTOR FÜR DIE KATALYTISCHE SYNTHESE
REACTEUR DE SYNTHESE CATALYTIQUE

(30) Priority: 10.02.2021 EP 21156311
(43) Date of publication of application: 20.12.2023
(73) Proprietor: CASALE SA, 6900 Lugano (CH)
(72) Inventor: RIZZI, Enrico, 22070 Casnate Con Bernate (CO) (IT)
(74) Representative: M. Zardi & Co S.A.
(86) International application number: PCT/EP2022/053063
(87) International publication number: WO 2022/171644

(56) References cited:
- EP-A1- 2 014 356
- EP-A2- 0 365 929
- WO-A1-2017/052398
- WO-A1-2019/121155
- US-A- 5 015 383
- US-A- 5 250 270
- US-A1- 2019 015 807

## Description

### Filed of application

The present invention relates to the technical field of catalytic synthesis reactors, for reactions that occur in the gaseous phase, comprising a catalytic bed with an essentially annular cylindrical shape.

### Prior art

The type of reactors hereinafter considered are widely used in the chemical industry. Well known examples are represented by ammonia, methanol, and water gas shift reactors, e.g. by US 2019/015807 A1 or EP 0 365 929 A2.

These reactors require an inlet header and an outlet header that are arranged to delimit the annular catalytic bed and respectively to distribute and collect the gas flow into/from the catalytic bed.

Said headers are essentially in the form of coaxially arranged cylindrical structures and may have a single wall or multiple walls. The making of said headers is a challenging task because the headers must comply with conflicting requirements and, additionally, must be realized at an acceptable manufacturing cost. The following is a brief explanation of the main problems faced by the designer of such headers.

The headers must obviously be gas-permeable, but at the same time, they must retain the catalyst, which is normally in the form of particles or granules; the gas-permeability is achieved through holes or openings that must be designed to take into account these two opposite requirements. It can be understood that the smaller is the catalyst (i.e. formed by particles of a small size), more challenging will be to reconcile these two functions.

The headers must have an adequate flow-through area for the gas discharge to prevent too high flow velocity (risk of fluidisation of the catalyst) and to prevent unacceptable head losses. The number, the size and the distribution of the holes must take these requirements into account.

Additionally, the headers must be able to provide a mechanical support to the catalytic mass, in particular they must withstand the thrust of the catalyst, resulting from its own weight, the forces generated by the different thermal expansion of the catalyst and the containment walls, and the thrust caused by the gas flow.

A further requirement is the resistance to clogging. Clogging occurs when the holes become obstructed by the catalyst particles. The header's wall in direct contact with the catalyst is particularly exposed to such risk. Clogging causes greater pressure losses, uneven gas flows distributions, increase risk of fluidisation of the catalyst bed and ultimately increased risk of structural failure of the wall.

It should be noted that even a local failure of the header results in a loss of catalyst and severe damage to the reactor. Commonly, the structural failure of a header leads to an unwanted shutdown of the plant, with important economic losses.

The aforementioned problems are more felt by the inner header, which has a lateral surface typically about one-third of that of the outer header. Moreover, in the standard inward-flow reactor configurations the inner header represents the outer gas collector and is more exposed to the risk of clogging owing to the direction of the gas, which tends to convey the catalyst particles towards the outer collector's wall.

A further issue observed in the ammonia reactors is caused by the nitriding, which may lead to stainless steel's embrittlement. The embrittlement arose by the absorption of atomic nitrogen in the steel's ferritic phase, leading to the precipitation of very hard nitrides that distort the crystal lattice.

Materials substantially immune to nitriding are known, for examples the nickel-chromium alloys (Inconel) however, they are expensive. The use of nickel-based alloys in addition to increasing costs introduces the problem of making welded connections with austenitic steel components. Heterogeneous welds pose serious issues of reliability due to the different metallurgical composition and to the dissimilar thermal expansion of the materials. These problems are accentuated at high temperatures and in particular in the presence of nitriding or hydrogen attack. Heterogeneous welds between the nickel-base alloys and the stainless steel may result in a fragile fracture owing to the thermally stressed caused by the different thermal expansion coefficients of said materials.

The use of expensive alloys can be proposed to manufacture the catalyst-retaining walls (i.e. walls in direct contact with the catalyst), which, with the adoption of special precautions, can be made with a small thickness and via a punching procedure which is less costly compared to the traditional machining methods. As known, the punching process requires that the thickness of the metal sheet must not be greater than the diameter of the holes to be made consequently, the punching process is generally applicable to thin perforated walls.

However, if the catalyst-retaining walls are made with a small thickness, said walls would not be able to oppose the thrusts exerted by the catalytic bed and therefore it is necessary to provide load-bearing walls having a greater thickness. The prior art considers making the joint between the catalyst-retaining walls and the load-bearing walls by welding. Assuming to realise the catalyst-retaining walls using a high-performance alloy and the load-bearing walls using a less expensive material, i.e. ordinary austenitic steel, the aforementioned issues of reliability of the heterogeneous welds are still present due to the different thermal expansion of the two alloys which may lead to the fracture of the welded joint. Furthermore, It is only possible to compensate for the difference in thermal expansion between two dissimilar joints in a concentrated area using non-welded joints, for example by means of adequate clearances. Essentially, in the presence of welded joints, it is necessary to manufacture also the load-bearing walls using high-quality materials. Unfortunately, the consequent increase in costs would be unacceptable.

While not being exhaustive, the considerations illustrated above provide an idea of the problematics encountered by the design engineers during the header's design stage for catalytic reactors herein considered; these problematics are particularly felt when the catalyst has a fine particle size or fine granulometry. It should be noted that a fine catalyst is considered to be advantageous for the synthesis process: therefore, in the art, there is a desire to find new suitable headers or collectors which are reliable and cheap to be manufactured.

In the prior art, the headers' manufacturing design is oriented towards the solution, which provides a metallic mesh associated with a supporting element. This solution, however, is not entirely satisfactory because the metallic mesh is a thin element that is subject to tearing or rupture. This drawback is particularly exacerbated in the presence of fine catalysts. In order to retain a fine catalyst, it should be noted that it is necessary to employ a mesh which is also very fine, and therefore made with a metal wire having a small diameter as such not very strong, in addition being very problematic to be welded. For these reasons, wire mesh-based collectors are unsuitable for retaining a fine catalyst.

EP2014356 discloses a header with a double-wall structure in which the wall facing the catalyst is provided with openings for the gas in the form of elongated slits instead of circular holes. These slits are also referred to as "slots" and the perforated metal wall provided with slits is consequently referred to as a "slotted" plate.

Said constructional design provided with slits or slots has proved to be satisfactory in many applications, but it cannot be easily adapted to retain fine catalysts. To reduce the unitary dimension of the slots, while maintaining a similar gas flow cross-section area, it would be necessary to provide a very large number of slots closely arranged to each other. This construction design is quite complex to be realised in practices and will result in a too weak structure. It should be noted that a slotted plate has an anisotropic behaviour due to the orientation of the slots as such it is intrinsically less resistant than a plate or wall having circular holes, at parity of perforated surface area. Increasing the number of slots increases this drawback.

Basically, the known solutions are not easily "scalable" for use with a fine catalyst. The apparent solution of providing a mesh or a slotted wall having smaller openings introduce a series of additional problems and, in practice, it was proven difficult to be followed.

Therefore, it is highly desirable to design a header that can retain fine catalysts, inexpensive to be manufactured and that does not suffer from the aforementioned problems. This desire has not yet found an adequate response.

Regarding the ammonia synthesis reactors, which represent a preferred application of the present invention, the following features may be noted: ammonia synthesis catalysts typically have particles in the form of flakes that therefore have one of the three spatial dimensions smaller than the other two. The particle size of the catalyst conventionally is represented by an equivalent diameter, which is determined by means of a screening process, i.e. a diameter of a spherical particle having the same permeability as a catalyst particle.

In most applications, the ammonia catalyst has a particle size of about 3.0 mm; however, there is a growing interest in fine catalysts having a smaller size, for example 1.5 mm or less. For the reasons illustrated above, however, the use of a fine catalyst complicates and increases the manufacturing cost the headers.

### Summary of the invention

The invention aims to provide a structure for cylindrical headers used in catalytic reactors which satisfies the following requirements: good structural strength; adaptability to retain fine catalysts; suitability for being manufactured at industrially acceptable costs; reliability over time; ability to distribute the gas uniformly with head losses and gas speeds compatible with the required operating conditions. Particularly, the invention addressed the problem of how to contain fine catalysts at an acceptable cost.

The aims are reached with a reactor according to claim 1. Preferred embodiments are disclosed in the dependent claims.

At least one of the inlet header and the outlet header has a multiple-wall structure comprising a first perforated plate, a second perforated plate, which is a micro-perforated plate, and an intermediate spacer wall. Said intermediate wall is preferably an expanded metal plate or a coarse mesh. The first perforated plate performs the function of load-bearing element of the header, i.e. it withstands essentially mechanical stress (and provides, if required, a homogeneous distribution of the gas flow along the entire surface of the header); the micro-perforated plate faces the catalytic bed and performs the function of retaining the catalyst particles; the intermediate wall is sandwiched between the perforated plate and the micro-perforated plate and acts substantially as a spacer element to create an equalisation chamber and to uniformly support the micro-perforated plate.

The invention offers the following advantages.

The retention of the catalyst is essentially performed by the micro-perforated plate, which may be manufactured, if necessary, using costly high-performance materials, such as nickel-chromium alloys. The related cost is acceptable said micro-perforated plate does not need to provide a load-bearing function and, consequently, can be manufactured with a small thickness. Then the invention reduces the amount of expensive high-grade material, which is only used to manufacture the crucial element in direct contact with the catalyst. Additionally, the micro-perforated plate may be configured to retain a very fine catalyst without complicating the manufacturing process.

The mechanical strength of a micro-perforated plate is considerably higher than the strength of a prior-art thin net having comparable openings, because the micro-perforated plate reacts to the mechanical stress like a sheet (i.e. a metal plate) whereas the mechanical strength of a thin net is the result of the sum of the resistances of the single wire components.

The first perforated plate provides the load-bearing function and must have an adequate thickness to perform the above-mentioned task. Since it is not in direct contact with the catalyst, however, said perforated plate may be fabricated using conventional technology and material, such as stainless steel. Moreover, the perforated plate can have holes greater than the catalyst particles because the catalyst is retained by the micro-perforated plate. Making the thick load-bearing plate with relatively large holes is less expensive.

The intermediate wall acts as a spacer and creates an equalisation chamber to ensure a uniform distribution of the gas and a uniform support of the micro-perforated plate. To this purpose said intermediate wall has preferably a high void-to-solid ratio. Various low-cost elements are available to satisfy this requirement. In a preferred embodiment, the intermediate wall is made using an expanded metal sheet. An expanded metal sheet has a mesh pattern and preferably said mesh is square, rhomboidal, hexagonal or of other shapes.

A fundamental advantage of the invention lies in the multiple-wall structure where each component performs a specific task. Each of the three walls can be made with a material, thickness and specific features tailored to the function, i.e. load-bearing function, gas equalisation function and catalyst retaining function. In this sense, the invention ensures an optimal use of the resources, for example by concentrating the use of the more expensive material only where necessary.

### Description of the invention

The micro-perforated plate and the first perforated plate (or load-bearing perforated plate) are permeable to the passage of the reaction gases by means of holes having a circular or substantially circular shape or a regular polygonal shape. For example in some embodiments the polygonal holes may be square holes.

The characteristic size of the holes of the perforated plates denotes the diameter of circular holes or double the apothem of regular polygonal holes. The apothem denotes the radius of the inscribed circle of the polygon.

In the first perforated plate, the holes have a characteristic size equal to or greater than a minimum size d1. In the micro-perforated plate, the holes have a characteristic size not greater than a maximum size d2. Said second size d2 is smaller than said first size d1 (d2<d1) so that the holes of the micro-perforated plate are smaller than the holes of the first perforated plate.

The holes of said plates are arranged so that each hole of the first plate faces a plurality of smaller holes in the micro-perforated plate, to avoid the formation of preferential gas paths between the first plate and the micro-perforated plate.

Both the first perforated plate and the micro-perforated plate have a suitable distribution of holes. In an embodiment the plates have holes with a uniform characteristic size, i.e. all the holes in the first perforated plate have a first size and all the holes in the micro-perforated plate have a second size, which is smaller than said first size. In other embodiments, the first perforated plate may have a pattern of holes with a different size depending on the location of the holes in the plate, to achieve a better distribution of the flow. For example the holes may be smaller or larger depending on the distance from a gas inlet. The micro-perforated plate generally has all holes of the same size.

The size of the holes in the micro-perforated plate may be selected depending on the size of the catalyst which is retained inside the catalytic header. For example referring to a m icro-perforated plate with circular holes, a catalyst with a nominal particle size of 0.5 to 1.0 mm may be retained by 0.8 mm holes; 1.6 mm holes may retain a catalyst with particle size of 1.0 to 2.0 mm; a catalyst with a particle size of 2.0 to 3.0 mm may require holes with a diameter of 3.2 mm.

The maximum size of the holes may be calculated as the minimum dimension of the catalyst particles multiplied by a factor comprised between 1.5 and 1.8, preferably 1.6. The aforementioned dimension refers to a nominal value; generally, a tolerance for example of +/- 0.2 mm is considered. These values have been obtained by the applicant through experimental tests.

The particle dimension denotes for example an equivalent diameter (if referred to a non-spherical granule) or the diameter of an essentially spherical granule. It should be noted that, typically, a micro-perforated plate can retain a catalyst having non-spherical particles and a particle size slightly larger than the holes in said plate. This is made possible because the catalyst particles typically have a dimension (or two dimensions) larger than the nominal dimension. The nominal dimension is established within a range; in this respect, in order to determine the appropriate dimension of the holes in the micro-perforated plate, the minimum dimension of said range is always considered.

The particle size of the catalyst may be represented by a mean diameter, if expedient. Preferably said mean diameter is the Sauter mean diameter (SMD) which is defined in the literature as the diameter of a sphere having the same volume/surface ratio as the particle of interest. Accordingly the SMD can be calculated as a function of the surface area and volume of particles. In presence of irregular particles, the mean value of interest can be determined on the basis of a statistically relevant number of particles.

According to a particularly preferred embodiment, for the fine catalysts exploited for the synthesis of ammonia, a micro-perforated plate having holes with a characteristic size of 0.8 mm is preferred.

The holes of the load-bearing perforated plate are larger than the holes of the micro-perforated plate. Typically, the characteristic size of the holes in the perforated plate is greater than or equal to 2.5 mm. Generally, the load-bearing perforated plates are 5 mm thick, and the distribution holes have a minimum characteristic size of 5 mm, preferably comprised between 6 and 8 mm.

In a particularly preferred embodiment, the micro-perforated plate has a thickness equal to the characteristic size of its holes. Similarly, the load-bearing perforated plate may have a thickness equal to the characteristic size of its holes in embodiments with holes of uniform size. The manufacturing of a perforated plate having a thickness equal to at least the characteristic size (e.g. diameter) of the holes can be performed via a mechanical punching process which is fast and inexpensive.

In all embodiments described above, the preferred shape of holes is circular and in that case the term characteristic size denotes the diameter of the holes.

The material used for the realisation of the micro-perforated plate may be selected depending on its direct exposure to the catalyst and to the reaction environment. In ammonia synthesis reactors, the micro-perforated plate is advantageously manufactured using a nickel-chromium alloy to improve the nitriding corrosion resistance. The preferred alloys, in this corrosive environment, are Inconel 600 and Inconel 625.

The load-bearing perforated plate is not in direct contact with the catalyst and has a bigger thickness than the micro-perforated plate, therefore may be manufactured using conventional stainless steels such as AISI 321 or AISI 310.

The load-bearing plate and the micro-perforated plate are exposed to similar temperature and to similar gas composition and may suffer surface deterioration. The thicker load-bearing perforated plate, however, is able to withstand a greater surface deterioration, expressed in absolute value, than the micro-perforated plate. For this reason, the perforated plate may be manufactured using less noble materials.

The load-bearing perforated plate for use in the industrial reactors for the synthesis of ammonia or methanol synthesis has preferably a thickness comprised between 3 and 8 mm, more preferably comprised between 4 and 6 mm.

Preferentially, the micro-perforated plate has holes equally distributed on its surface, thus imparting an isotropic mechanical behaviour and a stress increase localised in the proximity of the holes. The term isotropic mechanical behaviour denotes that the plate reacts equally to forces having different directions, contrary to plates of the prior art having a large number of non-circular or non-regular openings which may determine a weaker reaction according to certain directions of stress.

The holes in the micro-perforated plate may be staggered with respect to the holes in the perforated plate. The holes in the micro-perforated plate are small and closely arranged, so that a plurality of holes (e.g. 5 or 6 holes) in the micro-perforated plate face a corresponding hole in the load-bearing perforated plate. In this way, preferential paths of the gas flow are avoided, the equalisation effect in the interspace between the two plates (where the intermediate wall is inserted) is improved, the direct impact of the gas flow on the catalyst is avoided, and the risk of fluidisation of the catalytic bed is minimised.

The intermediate wall may be made with an expanded metal plate preferably having a rhomboidal mesh, with the longer sides of the lozenges parallel to the axis of the header, which also facilitates the calendering process and minimises both the stresses and the irregularities due to the polygonal shape of the expanded metal plate after calendering.

The intermediate wall has a void percentage preferably comprised between 40% and 90%. A high void percentage is preferable because it creates an equalisation chamber. Said equalisation chamber serves to evenly distribute the gas flow through the holes in the perforated plate over the whole surface of the micro-perforated plate. If the micro-perforated plate is laid directly against the perforated plate, the gas flow across the micro-perforated plate would be limited to only the holes facing the holes in the perforated plate. The expanded metal plate (intermediate wall) avoids this drawback.

The expanded metal plate may be manufactured, for example, using AISI 321 or AISI 310 stainless steel. Ordinary AISI 304 steel may also be used for the inlet headers. The expanded metal plate may have a thickness for example comprises between 1 and 5 mm, preferably between 1 and 3 mm and more preferably between 2 mm and 3 mm. In order to obtain an equalisation chamber with the highest possible void percentage, it is preferable to select the thicknesses value close to the bottom limit value of the aforementioned ranges.

In a particularly preferred embodiment the first perforated plate, the expanded metal plate and the micro-perforated plate, before being inserted into the catalytic synthesis reactor, are subjected to a calendering process. Preferably, the plates are calendered separately and then are joined together (for example mounted on top of one another) so as to form the catalytic header.

Alternatively, in another embodiment of the present invention, the plates may be calendered simultaneously with the aid of rollers and support beams or surrounding ribs which are arranged between the plates during calendering.

Preferably, the joining between the calendered plates is obtained by means of welded or bolted joints which may be disassembled. The perforated (load-bearing) plate has longitudinal welded joints to form the cylinder after calendering.

Concerning the joints between the walls, which comprises the header, an advantageous characteristic of the invention is that the formation of said joints does not require welding. Preferably, the micro-perforated plate is not welded to the perforated plate but fixed using bolted joints or clamps. These joints are advantageously configured so that the load acting on the joint is distributed uniformly over the whole perimeter of the micro-perforated plate and locking in position occurs by means of the abutment. The intermediate plate made for example of an expanded metal sheet may be inserted in the cavity between the perforated plate and the micro-perforated plate without requiring joints. The forces acting on the micro-perforated plate are transmitted to the load-bearing perforated plate via said intermediate wall.

The use of bolted joints that can be disassembled is particularly advantageous when the header uses dissimilar materials since it avoids heterogeneous welds. This is particularly advantageous when the perforated plate is made of stainless steel and the micro-perforated plate is made of nickel-chromium alloy, and they are then joined together. In fact, the weld between said two plates is problematic due to the different metallographic structure of the two materials and due to different thickness.

In one embodiment, the micro-perforated plate has a circumferential anchoring to the load-bearing plate, in which the edge of the micro-perforated plate is folded around a rod so as to form an edge ring with an increased thickness along which the micro-perforated plate is folded back on itself and where the plate folded around the rod forming an edge cord. Said edge region is clamped against the load-bearing plate by means of a bolted connection positioned underneath the cord so that the cord forms an axially retaining element of the micro-perforated plate.

The micro-perforated plate may be anchored to the load-bearing perforated plate by means of a sliding connection configured to allow sliding, in the axial direction, of the micro-perforated plate with respect to the perforated plate. Such a sliding connection is useful to compensate for the different thermal expansion.

The headers may be pre-assembled outside of the synthesis reactor and introduced inside it through suitable manhole openings.

The header structure above described may be applied to one of the headers or both of them. Preferably, the reactor is configured so that the inlet and outlet headers are crossed by a gas flow of reactant and/or product directed radially or having an axial-radial direction.

### Description of the figures

Fig. 1 represents schematically in section a reactor according to an embodiment of the invention.
Fig. 2 shows two variants (a) and (b) of the header having a sliding joint between the micro-perforated plate wall and the perforated load-bearing wall.
Fig. 3 shows an embodiment of a removable bolted joint for anchoring the micro-perforated wall to the load-bearing wall.
Fig. 4 shows an example of execution of a circumferential joint.
Figs. 5 and 6 show an example of execution of a longitudinal joint.

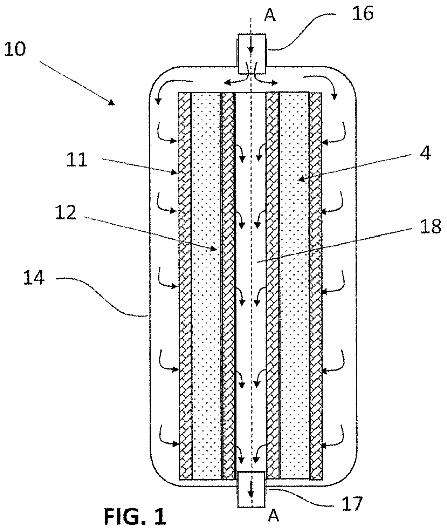

Fig. 1 shows in schematic a catalytic synthesis reactor 10 comprising a substantially cylindrical-shaped vessel 14, a gas inlet 16 and a gas outlet 17. The reactor further comprises a catalytic bed 4 with an annular cylindrical shape delimited by an inlet header 11 and an outlet header 12.
In the centre of the reactor there is a gas collection duct 18 communicating with the gas outlet 17. The reactor 10 is essentially symmetrical with respect to a vertical axis A-A.

A gaseous mixture entering the inlet 16 passes through the inlet header 11 with an essentially radial flow and reacts inside the catalytic bed 4. A flow containing the reaction products is collected by the outlet header 12, passes into the central duct 18 and, from here, leaves the reactor 10 through the gas outlet 17.

As is evident to a person skilled in the art, Fig. 1 is a simplified diagram. In industrial reactors, for example for ammonia synthesis, several catalytic beds may be arranged in series, such that the effluent from one catalytic bed may react further in a subsequent bed; inter-bed heat exchangers or also heat exchangers immersed in the catalyst for controlling the reaction temperature can be provided. Said heat exchangers can use water or the gas itself as heat exchange fluid. Moreover, the fresh incoming gas can flow along the walls of the reactor so as to pre-heat itself and cool down the reactor. These details are well-known to the person skilled in the art and a description thereof is not necessary.

Moreover, it will be noted that Fig. 1 shows a diagram of a reactor essentially having a radial inward flow, i.e. directed towards the axis A-A, but the invention is equally applicable to reactors having a radial outward flow or with a mixed axial/radial flow.

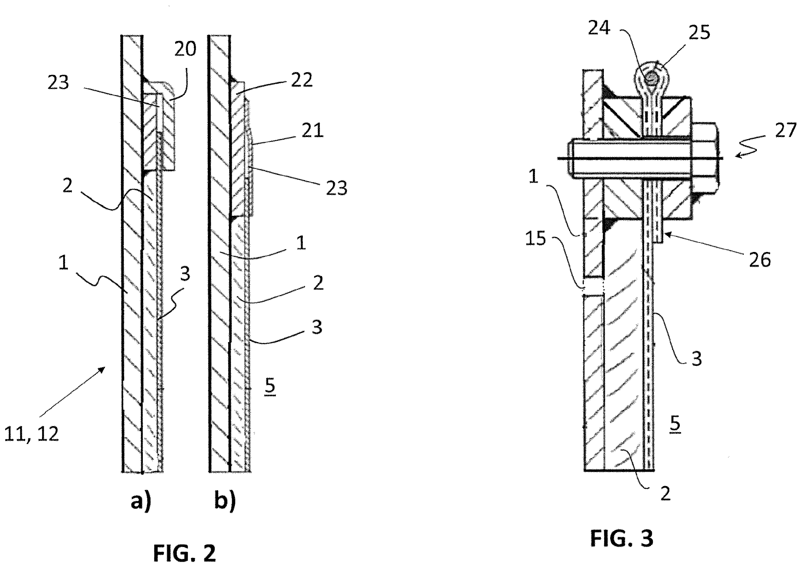

For the understanding of this embodiment of the invention it is useful to briefly describe the headers 11 and 12 (Figs. 2 and 3).

The inlet header 11 and the outlet header 12 are essentially cylindrical bodies with a multiple-wall structure that comprises an outer perforated plate 1, an intermediate expanded metal plate 2 and inner micro-perforated plate 3. The micro-perforated plate 3 faces the bed 4 and, consequently, is intended to operate in direct contact with the catalyst 5.

The perforated plate 1 acts as a load-bearing element; the expanded metal plate 2 acts as a spacer and creates a gas equalisation chamber; the micro-perforated plate 3 acts as an element for retaining the catalyst 5.

In other embodiments, only one of the inlet header 11 and the outlet header 12 may have the structure described above, the other one being made using conventional technique, for example a conventional perforated plate or slotted plate.

Fig. 2 shows two embodiments (a) and (b) of sliding joints where the micro-perforated plate 3 is held by a ring 20 welded directly onto the perforated plate 1 (Fig. 2a) or by a ring 21 welded to an intermediate plate 22 (Fig. 2b), the latter being welded to the plate 1. In both cases the joint leaves a space 23 for free sliding of the micro-perforated plate 3. Moreover, in both cases, welds between the micro-perforated plate 3 and the load-bearing plate 1 are not necessary. The embodiment according to said Fig. 2 may be exploited to compensate for expansion effects when the dilation effects are particularly pronounced.

Fig. 3 shows an example of a removable bolted joint that can be disassembled. The micro-perforated plate 3 has an edge folded around a rod 24 so as to form a folded edge 25 and a region 26 along which the micro-perforated plate is folded back on itself. Said region 26 of the plate 3 is clamped against the load-bearing plate 1 by means of a bolted connection 27 positioned underneath the edge 25 so that said edge 25 forms an axially retaining element of the micro-perforated plate 3. Basically, the plate 3 is hung from the edge 25 and the rod 24 having an even load distribution.

Fig. 3 also denotes one of the holes 15 of the load-bearing plate 1.

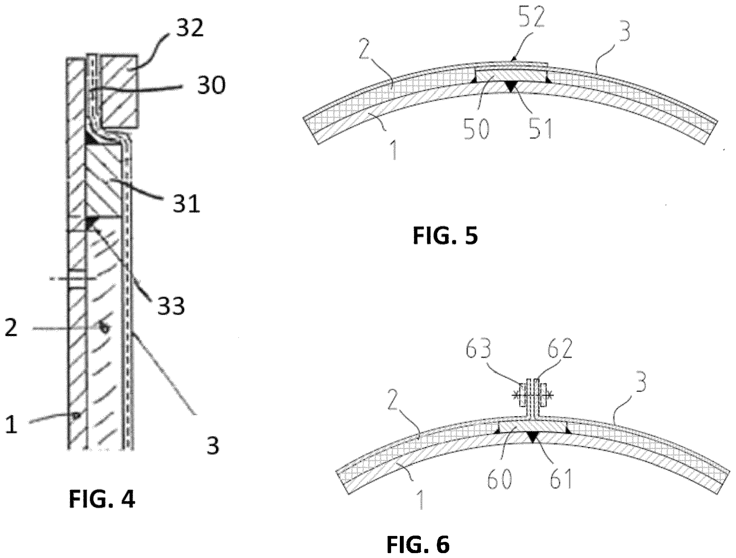

Fig. 4 (preferred configuration) shows a circumferential joint in which the micro-perforated plate 3 has an edge 30 folded in a "Z" shape. Locking in position of the micro-perforated plate 3 is carried out through the abutment and the friction of said Z-shaped folded edge against the duly rounded corners of a (lower) inner ring 31 and an (upper) outer ring 32.

Said inner ring 31 is shaped like a containment frame for the expanded metal plate, is welded to the perforated plate 1 (weld 33) and has the same thickness as the expanded metal plate 2. Said outer ring 32 is closed back on itself by welding or bolting. The outer ring 32 is also anchored to the load-bearing perforated plate 1.

The execution of Fig. 4 avoids heterogeneous welds, which are costly and unreliable and allow to compensate for the expansion differences between the perforated plate and the micro-perforated plate through the clearance and the assembly tolerances.

To facilitate the calendering operation of the micro-perforated plate with the circumferential edges folded in a Z shape, it is advantageous to perform a series of incisions in the Z-shaped folded zone of the edge 30 which interrupt the continuity of said zone.

To realise longitudinal joints, it is possible to follow an execution substantially similar to that shown in Fig. 4 or an overlap joint as shown, for example, in the embodiments of Figs. 5-6.

The joint according to Fig. 5 comprises a vertical joint frame 50 and a longitudinal weld 51. In the overlapping zone 52 (where the edges of the micro-perforated plate 3 overlap) bolting or welding can be performed.

The joint according to Fig. 6 is essentially a variant of Fig. 5 which uses a frame 60 and a weld 61, where the joint of the micro-perforated plate 3 comprises folded edges 62 bolted together with flat members 63.

## Claims

1. Catalytic synthesis reactor (10) comprising:
a catalytic bed (4) with an annular cylindrical shape;
an inlet header (11) and an outlet header (12) which are essentially cylindrical shaped and are concentrically arranged so as to form an outer wall and inner wall for delimiting and containing said catalytic bed;
said headers being gas-permeable so as to allow the distribution of a gaseous flow containing reactants and the collection of a gaseous flow containing reaction products respectively into and from the catalytic bed;
wherein at least one of said inlet header (11) and said outlet header (12) comprises:
a first perforated plate (1) which forms an outer wall of the header opposite to the catalytic bed and configured to act as a load-bearing structure of said header;
a second perforated plate, which is termed micro-perforated plate (3) and which forms an inner wall of the header facing the catalytic bed (4);
an intermediate gas-permeable wall (2) which is sandwiched between said perforated plate (1) and said micro-perforated plate (3) and said intermediate gas-permeable wall (2) acts substantially as a spacing element between said perforated plate (1) and said micro-perforated plate (3),
wherein the first perforated plate (1) is perforated with holes all having a characteristic size which is equal to or greater than a minimum size (d1) and the micro-perforated plate (3) is perforated with holes all having a characteristic size which is not greater than a maximum size (d2), said maximum size (d2) being smaller than said minimum size (d1) so that the holes of the micro-perforated plate are smaller than the holes of the first perforated plate,
wherein the holes of the first perforated plate and the holes of the micro-perforated plate have a circular shape or a regular polygonal shape, wherein said characteristic size is the diameter of circular holes or double the apothem for polygonal holes,
and wherein the micro-perforated plate (3) is thinner than the perforated plate (1), and
wherein the holes of said plates are arranged so that each hole of the first plate faces a plurality of the smaller holes of the micro-perforated plate.

2. Reactor according to claim 1, wherein the first perforated plate has a pattern of holes with a different characteristic size depending on the position on the holes in the plate.

3. Reactor according to claim 2, wherein the thickness of the micro-perforated plate is equal to said characteristic size of the holes of said micro-perforated plate.

4. Reactor according to claim 2 or 3, wherein the thickness of the first perforated plate is equal to said characteristic size of the holes of said first perforated plate.

5. Reactor according to any one of the previous claims, wherein the holes in the perforated plate and/or the holes in the micro-perforated plate are manufactured by punching.

6. Reactor according to any one of the previous claims, wherein the micro-perforated plate is made of an austenitic nickel-chromium alloy, preferably Inconel 600 or Inconel 625.

7. Reactor according to any one of the previous claims, wherein the first perforated plate is made of stainless steel, preferably AISI 321 or AISI 310.

8. Reactor according to any one of the previous claims, wherein said first perforated plate (1) has a thickness comprised between 3 and 8 mm, preferably between 4 and 6 mm.

9. Reactor according to any one of the previous claims, wherein the intermediate wall (2) is an expanded metal plate or a coarse mesh.

10. Reactor according to claim 9, wherein said expanded metal plate (2) is made of stainless steel, preferably AISI 321 or AISI 310.

11. Reactor according to claims 9 or 10, wherein said expanded metal plate (2) has a void percentage preferably comprised between 30% and 90%, preferably between 40% and 90%.

12. Reactor according to any one of the previous claims, wherein the micro-perforated plate is anchored to the load-bearing perforated plate by means of removable bolted joints.

13. Reactor according to any one of the previous claims, wherein the micro-perforated plate (3) has a circumferential anchoring to the perforated load-bearing plate (1), in which the edge of the micro-perforated plate is folded around a rod (24) so as to form an edge ring (26) with a double thickness where the micro-perforated plate (3) is folded back on itself, and said edge ring is tightened against the load-bearing perforated plate by means of a bolted connection located underneath the rod, so that the rod and the plate folded around it form an axially retaining element of the micro-perforated plate.

14. Reactor according to any of the claims 1 to 12, wherein the micro-perforated plate (3) has a peripheral edge (30) folded in a Z shape, which is in abutting contact between an inner ring (31) and an outer ring (32) which are fixed to the load-bearing plate (1) so as to form a circumferential joint.

15. Reactor according to any one of the previous claims, wherein the micro-perforated plate (3) is anchored to the load-bearing perforated plate (1) by means of a sliding connection configured to allow sliding of the micro-perforated plate in the axial direction with respect to the perforated plate in order to compensate for the different thermal expansion.

16. Reactor according to any one of the previous claims, comprising a longitudinal joint overlapping the micro-perforated plate.

17. Reactor according to any one of the previous claims, wherein the catalytic bed is made of catalytic particles, and said characteristic size of the holes of the micro-perforated plate is equal to the minimum dimension of the catalyst particles multiplied by a safety factor comprised between 1.5 and 1.8, preferably equal to 1.6.

18. Reactor according to claim 16, wherein the catalyst comprises particles with a nominal dimension ranging from 0.5 mm to 1.0 mm and said characteristic size of the holes of the micro-perforated plate is 0.8 mm, or wherein the catalyst comprises particles with a nominal dimension ranging from 1.0 mm to 2.0 mm and said characteristic size of the holes of the micro-perforated plate is 1.6 mm.

## Patentansprüche

1. Katalytischer Synthesereaktor (10), umfassend:
ein Katalysatorbett (4) mit einer ringförmig zylindrischen Form;
einen Einlassverteiler (11) und einen Auslassverteiler (12), die im Wesentlichen zylindrisch geformt und konzentrisch angeordnet sind, um eine äußere Wand und eine innere Wand zur Begrenzung und Aufnahme des genannten Katalysatorbettes zu bilden;
wobei die genannten Verteiler gasdurchlässig sind, um die Verteilung eines gasförmigen Stroms, der Reaktanten enthält, und die Sammlung eines gasförmigen Stroms, der Reaktionsprodukte enthält, jeweils in das Katalysatorbett hinein und aus ihm heraus zu ermöglichen;
wobei mindestens einer der genannten Einlassverteiler (11) und Auslassverteiler (12) Folgendes umfasst:
eine erste perforierte Platte (1), die eine äußere Wand des Verteilers bildet, die dem Katalysatorbett gegenüberliegt, und so konfiguriert ist, dass sie als tragende Struktur des genannten Verteilers fungiert;
eine zweite perforierte Platte, die als mikroperforierte Platte (3) bezeichnet wird und eine innere Wand des Verteilers bildet, die dem Katalysatorbett (4) zugewandt ist;
eine zwischen der genannten perforierten Platte (1) und der mikroperforierten Platte (3) eingeschlossene gasdurchlässige Zwischenwand (2), wobei die genannte gasdurchlässige Zwischenwand (2) im Wesentlichen als Abstandselement zwischen der perforierten Platte (1) und der mikroperforierten Platte (3) dient;
wobei die erste perforierte Platte (1) mit Löchern perforiert ist, die alle eine charakteristische Größe aufweisen, die gleich oder größer als eine Mindestgröße (d1) ist, und die mikroperforierte Platte (3) mit Löchern perforiert ist, die alle eine charakteristische Größe aufweisen, die nicht größer als eine Maximalgröße (d2) ist, wobei die genannte Maximalgröße (d2) kleiner ist als die genannte Mindestgröße (d1), sodass die Löcher der mikroperforierten Platte kleiner sind als die Löcher der ersten perforierten Platte;
wobei die Löcher der ersten perforierten Platte und die Löcher der mikroperforierten Platte eine kreisförmige oder regelmäßige polygonale Form haben, wobei die genannte charakteristische Größe der Durchmesser bei kreisförmigen Löchern oder das Doppelte der Apothema bei polygonalen Löchern ist;
und wobei die mikroperforierte Platte (3) dünner ist als die perforierte Platte (1);
und wobei die Löcher der genannten Platten so angeordnet sind, dass jedes Loch der ersten Platte einer Vielzahl der kleineren Löcher der mikroperforierten Platte gegenüberliegt.

2. Reaktor nach Anspruch 1, wobei die erste perforierte Platte ein Muster von Löchern mit unterschiedlicher charakteristischer Größe abhängig von der Position der Löcher in der Platte aufweist.

3. Reaktor nach Anspruch 2, wobei die Dicke der mikroperforierten Platte gleich der genannten charakteristischen Größe der Löcher der mikroperforierten Platte ist.

4. Reaktor nach Anspruch 2 oder 3, wobei die Dicke der ersten perforierten Platte gleich der genannten charakteristischen Größe der Löcher der ersten perforierten Platte ist.

5. Reaktor nach einem der vorhergehenden Ansprüche, wobei die Löcher in der perforierten Platte und/oder die Löcher in der mikroperforierten Platte durch Stanzen hergestellt sind.

6. Reaktor nach einem der vorhergehenden Ansprüche, wobei die mikroperforierte Platte aus einer austenitischen Nickel-Chrom-Legierung besteht, vorzugsweise Inconel 600 oder Inconel 625.

7. Reaktor nach einem der vorhergehenden Ansprüche, wobei die erste perforierte Platte aus rostfreiem Stahl besteht, vorzugsweise AISI 321 oder AISI 310.

8. Reaktor nach einem der vorhergehenden Ansprüche, wobei die genannte erste perforierte Platte (1) eine Dicke zwischen 3 und 8 mm aufweist, vorzugsweise zwischen 4 und 6 mm.

9. Reaktor nach einem der vorhergehenden Ansprüche, wobei die Zwischenwand (2) eine Streckmetallplatte oder ein grobes Gitter ist.

10. Reaktor nach Anspruch 9, wobei die genannte Streckmetallplatte (2) aus rostfreiem Stahl besteht, vorzugsweise AISI 321 oder AISI 310.

11. Reaktor nach Anspruch 9 oder 10, wobei die genannte Streckmetallplatte (2) einen Porenanteil aufweist, der vorzugsweise zwischen 30 % und 90 %, vorzugsweise zwischen 40 % und 90 %, liegt.

12. Reaktor nach einem der vorhergehenden Ansprüche, wobei die mikroperforierte Platte an der tragenden perforierten Platte mittels lösbarer Schraubverbindungen verankert ist.

13. Reaktor nach einem der vorhergehenden Ansprüche, wobei die mikroperforierte Platte (3) eine Umfangsverankerung an der tragenden perforierten Platte (1) aufweist, bei der der Rand der mikroperforierten Platte um eine Stange (24) herumgefaltet ist, um einen Randring (26) mit doppelter Dicke zu bilden, wo die mikroperforierte Platte (3) auf sich selbst zurückgefaltet ist, und wobei der genannte Randring mittels einer unterhalb der Stange angeordneten Schraubverbindung gegen die tragende perforierte Platte gespannt ist, sodass die Stange und die um sie gefaltete Platte ein axial zurückhaltendes Element der mikroperforierten Platte bilden.

14. Reaktor nach einem der Ansprüche 1 bis 12, wobei die mikroperforierte Platte (3) einen umlaufenden Rand (30) aufweist, der in Z-Form gefaltet ist und sich zwischen einem inneren Ring (31) und einem äußeren Ring (32) befindet, die an der tragenden Platte (1) befestigt sind, um eine Umfangsverbindung zu bilden.

15. Reaktor nach einem der vorhergehenden Ansprüche, wobei die mikroperforierte Platte (3) mittels einer Gleitverbindung an der tragenden perforierten Platte (1) verankert ist, die so konfiguriert ist, dass sie ein Gleiten der mikroperforierten Platte in axialer Richtung relativ zur perforierten Platte ermöglicht, um die unterschiedliche thermische Ausdehnung auszugleichen.

16. Reaktor nach einem der vorhergehenden Ansprüche, umfassend eine Längsverbindung, die die mikroperforierte Platte überlappt.

17. Reaktor nach einem der vorhergehenden Ansprüche, wobei das Katalysatorbett aus katalytischen Partikeln besteht und die genannte charakteristische Größe der Löcher der mikroperforierten Platte gleich der Mindestabmessung der Katalysatorpartikel multipliziert mit einem Sicherheitsfaktor ist, der zwischen 1,5 und 1,8 liegt, vorzugsweise gleich 1,6.

18. Reaktor nach Anspruch 16, wobei der Katalysator Partikel mit einer Nennabmessung von 0,5 mm bis 1,0 mm umfasst und die genannte charakteristische Größe der Löcher der mikroperforierten Platte 0,8 mm beträgt, oder wobei der Katalysator Partikel mit einer Nennabmessung von 1,0 mm bis 2,0 mm umfasst und die genannte charakteristische Größe der Löcher der mikroperforierten Platte 1,6 mm beträgt.

## Revendications

1. Réacteur de synthèse catalytique (10) comprenant :
un lit catalytique (4) avec une forme cylindrique annulaire ;
un collecteur d'entrée (11) et un collecteur de sortie (12) qui sont essentiellement de forme cylindrique et sont agencés de manière concentrique de façon à former une paroi externe et une paroi interne pour délimiter et contenir ledit lit catalytique ;
lesdits collecteurs étant perméables aux gaz de façon à permettre la distribution d'un écoulement gazeux contenant des réactifs et la collecte d'un écoulement gazeux contenant des produits de réaction respectivement dans et depuis le lit catalytique ;
dans lequel au moins l'un dudit collecteur d'entrée (11) et dudit collecteur de sortie (12) comprend :
une première plaque perforée (1) qui forme une paroi externe du collecteur opposée au lit catalytique et configurée pour agir comme une structure porteuse dudit collecteur ;
une deuxième plaque perforée, qui est appelée plaque micro-perforée (3) et qui forme une paroi interne du collecteur faisant face au lit catalytique (4) ;
une paroi intermédiaire perméable aux gaz (2) qui est prise en sandwich entre ladite plaque perforée (1) et ladite plaque micro-perforée (3) et ladite paroi intermédiaire perméable aux gaz (2) agit sensiblement comme un élément d'espacement entre ladite plaque perforée (1) et ladite plaque micro-perforée (3),
dans lequel la première plaque performée (1) est perforée de trous ayant tous une taille caractéristique qui est supérieure ou égale à une taille minimale (d1) et la plaque micro-perforée (3) est perforée de trous ayant tous une taille caractéristique qui n'est pas supérieure à une taille maximale (d2), ladite taille maximale (d2) étant inférieure à ladite taille minimale (d1) de sorte que les trous de la plaque micro-perforée soient plus petits que les trous de la première plaque perforée,
dans lequel les trous de la première plaque perforée et les trous de la plaque micro-perforée ont une forme circulaire ou une forme polygonale régulière, dans lequel ladite taille caractéristique est le diamètre de trous circulaires ou le double de l'apothème pour des trous polygonaux,
et dans lequel la plaque micro-perforée (3) est plus mince que la plaque perforée (1), et
dans lequel les trous desdites plaques sont agencés de sorte que chaque trou de la première plaque fasse face à une pluralité des trous plus petits de la plaque micro-perforée.

2. Réacteur selon la revendication 1, dans lequel la première plaque perforée a un motif de trous avec une taille caractéristique différente en fonction de la position sur les trous dans la plaque.

3. Réacteur selon la revendication 2, dans lequel l'épaisseur de la plaque micro-perforée est égale à ladite taille caractéristique des trous de ladite plaque micro-perforée.

4. Réacteur selon la revendication 2 ou 3, dans lequel l'épaisseur de la première plaque perforée est égale à ladite taille caractéristique des trous de ladite première plaque perforée.

5. Réacteur selon l'une quelconque des revendications précédentes, dans lequel les trous dans la plaque perforée et/ou les trous dans la plaque micro-perforée sont fabriqués par poinçonnage.

6. Réacteur selon l'une quelconque des revendications précédentes, dans lequel la plaque micro-perforée est en alliage austénitique nickel-chrome, de préférence en Inconel 600 ou Inconel 625.

7. Réacteur selon l'une quelconque des revendications précédentes, dans lequel la première plaque perforée est en acier inoxydable, de préférence en AISI 321 ou AISI 310.

8. Réacteur selon l'une quelconque des revendications précédentes, dans lequel ladite première plaque perforée (1) a une épaisseur comprise entre 3 et 8 mm, de préférence entre 4 et 6 mm.

9. Réacteur selon l'une quelconque des revendications précédentes, dans lequel la paroi intermédiaire (2) est une plaque en métal déployé ou un maillage grossier.

10. Réacteur selon la revendication 9, dans lequel ladite plaque en métal déployé (2) est en acier inoxydable, de préférence en AISI 321 ou AISI 310.

11. Réacteur selon les revendications 9 ou 10, dans lequel ladite plaque en métal déployé (2) a un pourcentage de vides compris de préférence entre 30 % et 90 %, de préférence entre 40 % et 90 %.

12. Réacteur selon l'une quelconque des revendications précédentes, dans lequel la plaque micro-perforée est ancrée à la plaque perforée porteuse au moyen d'assemblages boulonnés amovibles.

13. Réacteur selon l'une quelconque des revendications précédentes, dans lequel la plaque micro-perforée (3) a un ancrage circonférentiel à la plaque perforée porteuse (1), dans lequel le bord de la plaque micro-perforée est plié autour d'une tige (24) de façon à former un anneau de bord (26) avec une double épaisseur où la plaque micro-perforée (3) est repliée sur elle-même, et ledit anneau de bord est serré contre la plaque perforée porteuse au moyen d'un raccordement boulonné situé sous la tige, de sorte que la tige et la plaque pliée autour d'elle forment un élément de retenue axiale de la plaque micro-perforée.

14. Réacteur selon l'une quelconque des revendications 1 à 12, dans lequel la plaque micro-perforée (3) a un bord périphérique (30) plié sous une forme de Z, qui est en contact de butée entre un anneau interne (31) et un anneau externe (32) qui sont fixés à la plaque porteuse (1) de façon à former un joint circonférentiel.

15. Réacteur selon l'une quelconque des revendications précédentes, dans lequel la plaque micro-perforée (3) est ancrée à la plaque perforée porteuse (1) au moyen d'un raccordement coulissant configuré pour permettre le coulissement de la plaque micro-perforée dans la direction axiale par rapport à la plaque perforée afin de compenser la dilatation thermique différente.

16. Réacteur selon l'une quelconque des revendications précédentes, comprenant un joint longitudinal chevauchant la plaque micro-perforée.

17. Réacteur selon l'une quelconque des revendications précédentes, dans lequel le lit catalytique est constitué de particules de catalyseur, et ladite taille caractéristique des trous de la plaque micro-perforée est égale à la dimension minimale des particules de catalyseur multipliée par un facteur de sécurité compris entre 1,5 et 1,8, de préférence égal à 1,6.

18. Réacteur selon la revendication 16, dans lequel le catalyseur comprend des particules avec une dimension nominale allant de 0,5 mm à 1,0 mm et ladite taille caractéristique des trous de la plaque micro-perforée est de 0,8 mm, ou dans lequel le catalyseur comprend des particules avec une dimension nominale allant de 1,0 mm à 2,0 mm et ladite taille caractéristique des trous de la plaque micro-perforée est de 1,6 mm.
